# EUROPÄISCHE PATENTSCHRIFT

(11) **EP 1 407 691 B1**
(45) Veröffentlichungstag und Bekanntmachung des Hinweises auf die Patenterteilung: **01.08.2012**
(21) Anmeldenummer: 03021894.5
(22) Anmeldetag: 27.09.2003
(51) Int. Cl.: F16C 33/30, F16C 29/04, A47B 88/10

(54) **Rollschubführung**
Linear roller bearing
Palier linéaire à rouleaux

(30) Priorität: 09.10.2002 DE 10247160
(43) Veröffentlichungstag der Anmeldung: 14.04.2004
(73) Patentinhaber: Grass GmbH, 6973 Höchst/Vlbg. (AT)
(72) Erfinder: Frey, Daniel, 6923 Lauterach (AT); Müller, Wolfgang, 6890 Lustenau (AT); Wenzel, Holger, 88131 Lindau (DE)
(74) Vertreter: Riebling, Peter

(56) Entgegenhaltungen:
- DE-U- 7 524 772
- GB-A- 1 331 189
- GB-A- 2 257 025
- US-A- 2 400 374
- US-A- 2 794 690
- US-A- 3 450 446
- US-A- 3 485 539
- US-A- 5 169 237
- US-A1- 2002 021 848

## Beschreibung

Die Erfindung betrifft eine Rollschubführung, vorzugsweise eine Schubladenführung als Vollauszug für Möbel, nach dem Oberbegriff des unabhängigen Anspruches.

### Stand der Technik:

Die DE-OS-43 12 425 zeigt eine Rollschubführung für Schubladen als Vollauszug für Unterflurmontage (unterhalb des Schubladenbodens) mit Korpus-Schubladenund Mittelschiene, wobei zwischen Mittelschiene und Korpusschiene sowie zwischen Mittelschiene und Schubladenschiene je ein Rollenwagen mit Laufrollen zur Lastübertragung vorhanden ist.

Die DE-OS-42 04 067 zeigt ebenfalls Rollenwagen mit Laufrollen, hier als Käfig bezeichnet, die ebenfalls die Last von der Schubladenschiene auf die Mittelschiene und von dort auf die Korpusschiene übertragen. Die Drehachsen aller Laufrollen sind dabei um 45° aus der Querachse zur Schieberichtung der Schienen bzw. der Schublade gedreht angeordnet. Zugleich sind die Drehachsen der Rollen zwischen Schubladenschiene und Mittelschiene zu den Drehachsen der Rollen zwischen Mittelschiene und Korpusschiene um 90° zueinander gedreht angeordnet. Zwischen den jeweiligen Schienen ist also ein schräges, axial und radial wirkendes Rollenlager angeordnet.

Die US-Patentschrift 4,025,138 zeigt eine Kugelführung für Schubladen als Vollauszug mit Kugeln in Käfigen zur Lastübertragung.

Die US-Patentschrift 4,089,567 zeigt eine Rollschubführung ohne Mittelschiene, d.h. ein Teilauszug ohne Vollauszugsmöglichkeit. Der Rollenwagen besitzt aber eine obere und eine unter Rollenanordnung. Die oberen Rollen stützen sich am oberen horizontalen Schenkel der Korpusschiene ab, während die unteren Rollen auf dem unteren horizontalen Schenkel abrollen. Zwischen diesen Rollen ist der horizontale Schenkel der Schubladenschiene geführt.

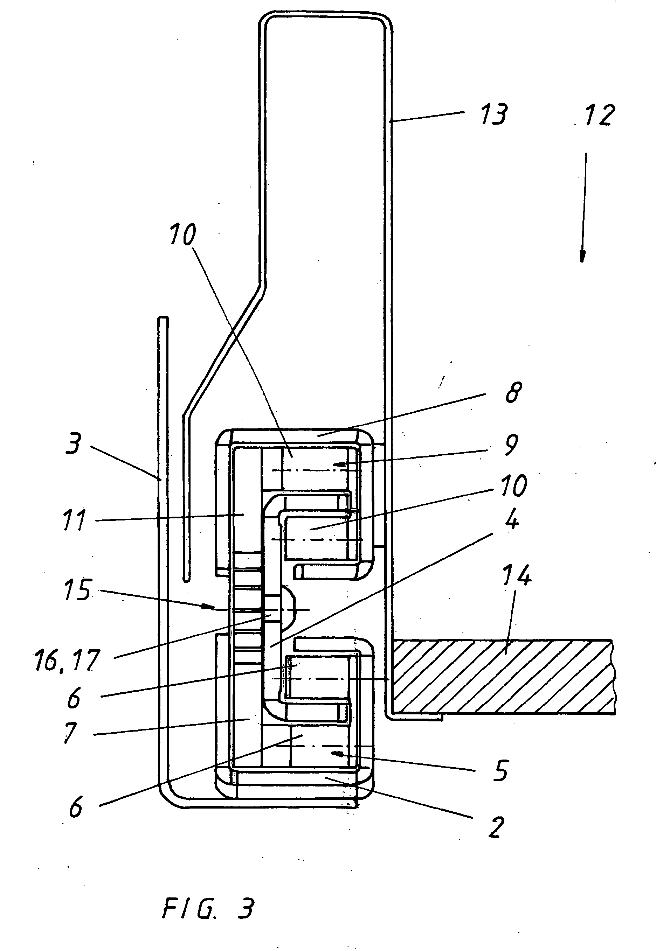

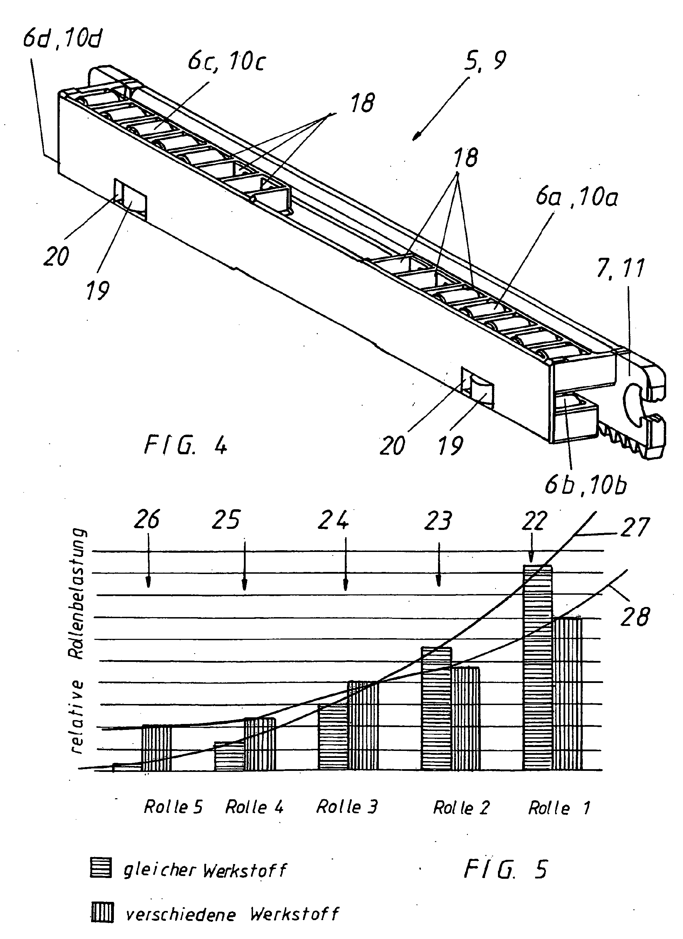

Die US-A-2,400,374 zeigt in Figur 3 nur im Durchmesser vergrößerte deformierbare Kugeln 28 an der Position Nr.3 von vorn und Position Nr.2 von hinten, nicht aber an Position Nr.1. Ziel ist nicht die Erhöhung der Lebensdauer und der maximalen Belastung, sondern das Festhalten zweier Bauteile in einer definierten Relativlage zueinander, was durch die Deformierbarkeit der vergrößerten deformierbaren Kugeln 28 geschieht. In Figur 5 ist ein Rollenkugellager dargestellt, bei dem es keine vorderste und hinterste Positionen gibt. Die Positionen der deformierbaren Kugeln des Rollenkugellagers der Figur 5 sind aber nach Drehung der beiden Bauteile zueinander unterschiedlich zu den gezeigten Positionen.

Die GB-A-2 257 025 offenbart ein Schubladen-Schienensystem mit zwischen den Schienen befindlichen zylinderförmigen und scheibenförmigen Rollen, die innerhalb eines Rollenkäfigs (Fig. 3) aufgenommen sind. Die zylinderförmigen Rollen mit kleinem Durchmesser wirken in der Hochachse als Abstützungen nach oben und unten zwischen den Schienen, die scheibenförmigen Rollen mit größeren Durchmesser wirken in der Horizontalen als seitliche Abstützungen zwischen den Schienen. Die zylinderförmigen Rollen mit kleinem Durchmesser und die scheibenförmigen Rollen mit größeren Durchmesser sind innerhalb des Rollenkäfigs alternierend aufgenommen, wobei die vordersten und die hintersten oberen und unteren zylinderförmigen Rollen mit kleinem Durchmesser ausgeführt sind. Alle Rollen sind hohl ausgebildet und besitzen eine zentrale Durchgangsbohrung durch die Drehachse.

Nachteil der US-A-2,400,374 und der GB-A-2 257 025 ist, dass nicht die am höchsten belasteten Rollen (z. B. vordere obere und untere hintere Rollen) erfindungsgemäß variiert werden, sondern entweder die Positionen Nr.3 und Nr.2 von vorn und hinten des Rollenkäfigs (US-A-2,400,374), was zu keiner geeigneten Entlastung der am höchsten belasteten Rollen führt, oder aber dass unnötiger Weise zusätzliche Rollen variiert werden (GB-A-2 257 025), was zu unnötigen Kosten führt oder dass keine belastungsangepasste abgestufte Variation der Rollen in Abhängigkeit des Drehpunktes der Rollenkäfige erfolgt (US-A-2,400,374 und GB-A-2 257 025), was ebenfalls zu keiner ausgewogenen Entlastung der belasteten Rollen führt.

Bei allen Ausführungen des Standes der Technik sind die Rollen beim Ein- und Ausfahren, als auch beim Offenstehen der Schublade ungleich belastet, was zu erhöhtem und damit vorzeitigem Verschleiß führt.

Die vordersten oberen und hintersten unteren Rollen sind hierbei am meisten durch die Gewichtskraft der Schublade belastet, da dort das größte Drehmoment um den Auflagepunkt bzw. -bereich der Rollenwagen der jeweiligen zusammen wirkenden Schienen aufeinander herrscht.

Der Betrag dieses Drehmoments hängt ab vom relativen Versatz der zugehörigen Schienen in Auszugsrichtung. Ist die Schublade voll eingefahren, dann sind alle Rollen nahezu gleich belastet. Wenn die Schublade voll ausgezogen ist, dann wirkt das maximale Drehmoment um den Drehpunkt, was zu einer maximalen Belastung der vordersten oberen und hintersten unteren Rollen führt.

Das Drehmoment nimmt mit abnehmendem Abstand der jeweiligen Rolle zum Drehpunkt der Schublade ebenfalls ab und nimmt mit zunehmendem Abstand der jeweiligen Rolle zum Drehpunkt der Schublade ebenfalls zu.

Je näher eine jeweilige Rolle bei einer offenen Schublade in Richtung des Drehpunktes liegt, desto geringer ist das Drehmoment an dieser Stelle auf Grund der herrschenden Hebelkräfte und damit ist die Belastungskraft auf diese Rolle geringer, als bei einer vom Drehpunkt entfernteren Rolle. Die geringste Belastung besteht bei der Rolle, die am dichtesten am Drehpunkt liegt, bzw. auf dem Drehpunkt.

Nachteil der Rollschubführungen des Standes der Technik ist also, dass die Belastungen der Rollen (oder anderen Walzkörpern) ungleich ist, und dadurch unterschiedliche Ermüdungserscheinungen an den jeweiligen Rollen entstehen, verstärkt insbesondere an den Vorderen. Derartige Ermüdungen der Rollen ergeben Abplattungen am Umfang insbesondere bei langem Stillstand in Auszugsstellung und/oder ein Abplatzen von Material an den Rollen-Lauf-Flächen. Die Schubladen mit derartigen Rollschubführungen besitzen also eine verkürzte Lebensdauer, auf Grund der unterschiedlichen Belastung der Rollen und eine erhöhte Belastung einzelner Rollen.

Aufgabe der vorliegenden Erfindung ist es, Rollschubführungen, vorzugsweise Schubladenführungen als Vollauszug für Möbel, bereit zu stellen, die eine Verbesserung der Lebensdauer bei gleichzeitiger Erhöhung der maximalen Traglast gewährleisten, und die einfach und kostengünstig konstruiert, sowie hinsichtlich der Bestückung mit Wälzkörpern leicht veränderbar sein sollen.

Die Aufgabe wird durch die Merkmale des unabhängigen Anspruches gelöst.

Kennzeichnend dabei ist, dass die Rollen bzw. allgemein die Walzkörper innerhalb eines Rollenpaketes (Rollenwagen) mindestens teilweise unterschiedlich gestaltet sind, durch beispielsweise:
1. Einsatz unterschiedlicher Materialien von Rolle zu Rolle oder in einer oder mehreren Rolle(n) selbst, mit unterschiedlichem E-Modul, wobei insbesondere die vorderste(n) höher belastete(n) Rolle(n) so gewählt wird (werden), dass diese Rolle(n) elastische Eigenschaften aufweist(en) oder z.B. die Rollen aus verschiedenen Materialien mehrschichtig aufgebaut sind.
2. Einsatz unterschiedlicher Rollendurchmesser und/oder Rollenbreiten, wobei insbesondere die vorderste höher belastete Rolle so gewählt wird, dass diese Rolle einen (etwas) geringeren Durchmesser und/oder eine (etwas) größere Breite besitzt.
3. Einsatz unterschiedlicher Rollenformen, wie z. B. hohle Rollen, oder bombierte Laufflächen.
4. Eine Kombination der oben beschriebenen Ausgestaltung der Rollen bzw. anderen verwendeten Walzkörpern.

Vorteile der erfindungsgemäßen Variation des Materials und/oder des Durchmessers und/oder der Form der Rollen, je nach Abstand zum Drehpunkt der Schublade sind, dass alle Rollen einer gleichmäßigeren Belastung während des Ein- und Ausfahrens und des Offenstehens der Schublade ausgesetzt sind oder die höher belasteten Rollen einen größeren Widerstand gegen Verschleiß aufweisen. Insgesamt vertragen die Rollen somit eine höhere Belastung bei längerer Lebensdauer durch Verhindern von Materialermüdungen.

Durch Automatisieren der Montage können die Rollenwagen problemlos in der richtigen Reihenfolge der sich in Material und/oder Geometrie sich unterscheidenden Rollen bestückt werden.

Die Erfindung eignet sich auch für achsgelagerte Walzkörper, und nicht nur für Käfiglagerung.

Die Erfindung betrifft also eine Rollschubführung, vorzugsweise eine Schubladenführung als Vollauszug für Möbel, bei der die Rollen der jeweiligen Rollenwagen nicht identisch, sondern mindestens teilweise unterschiedlich gestaltet sind. Es können unterschiedliche Materialien, oder unterschiedliche Geometrien der Rollen eingesetzt werden, oder aber beides, um die Gewichtsverteilung möglichst gleichmäßig auf alle bisher beim Stand der Technik höher beasteten vorderen oberen bzw. hinteren unteren Rollen zu verteilen. Insbesondere werden die unterschiedlichen Materialien und Geometrien so gewählt, dass die bei identischen Rollen ansonsten höher belasteten Rollen elastisch federnde Eigenschaften aufweisen. Vorteil der Erfindung ist es, eine Verbesserung der Lebensdauer der Schubladenführungen bei gleichzeitiger Erhöhung der maximalen Traglast zu gewährleisten.

Im Folgenden wird die Erfindung anhand einer Ausführungsform näher beschrieben, die jedoch nur beispielhaft, nicht aber einschränkend aufzufassen sein soll.

Es zeigen:
Figur 1: Eine perspektivische Ansicht einer rechte Schubladenführung als Vollauszug nach der Erfindung im zusammen gebauten Zustand;
Figur 2: Eine perspektivische Ansicht der Schubladenführung nach Figur 1 im zerlegten Zustand;
Figur 3: Eine Ansicht von hinten in Auszugsrichtung gesehen der Schubladenführung nach Figur 1 mit Darstellung der Synchronisationseinrichtung der Rollenwagen zur Mittelschiene;
Figur 4: Eine vergrößerte perspektivische Ansicht eines Rollenwagens mit Rollen und Zahnstange;
Figur 5: Ein Diagramm der unterschiedlichen Belastungen der einzelnen Rollen mit und ohne gleiche Materialien.

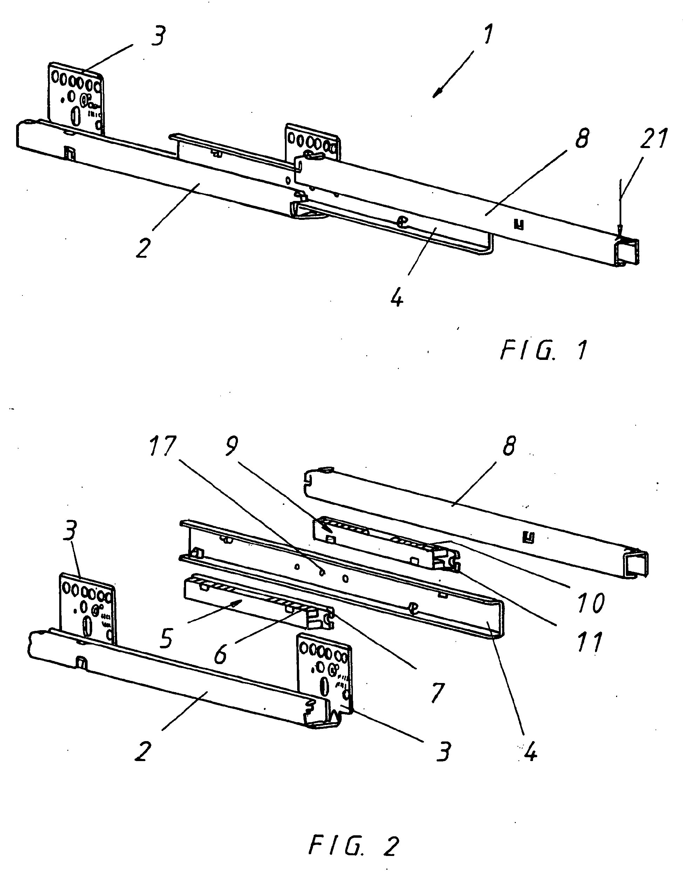

In Figur 1 ist eine Vollauszugs-Schubladenführung 1 zu sehen, wobei für die Rollschubführung einer Schublade 12 immer zwei derartige Schubladenführungen 1 vorgesehen sind.

Die Vollauszugs-Schubladenführung 1 beinhaltet drei Schienen, die über Wälzlager relativ zueinander in Längsrichtung verschiebbar sind. Eine über Anschraubwinkel 3 mit einem Möbelkorpus (nicht dargestellt) fest verbundene Korpusschiene 2 ist über einen ersten Rollenwagen 5 mit einer Mittelschiene 4 längsverschiebbar verbunden. Der Rollenwagen 5 besitzt hierzu Rollen 6. Die Mittelschiene 4 ist über einen weiteren Rollenwagen 9 mit der Schubladenschiene 8 längsverschiebbar verbunden. Auch der Rollenwagen 9 besitzt hierzu Rollen 10.

Figur 2 zeigt die Vollauszugs-Schubladenführung 1 nach Figur 1 in einer zerlegten Darstellung, wobei erkennbar ist, dass die Rollenwagen 5, 9 seitliche Zahnstangen besitzen, die zur Synchronisation der Relativbewegung zur Mittelschiene 4 dienen.

Figur 3 stellt nun eine Vergrößerung der Rückansicht der Schubladenschienen 2, 4, 8 dar, in der die Synchronisation der Rollenwagen sichtbar wird, sowie die Verbindung zur Schublade 12 mit Schubladenboden 14 über das Dekor 13. Das Schubladen-Dekor ist also mit der Schubladenschiene 8 verbunden und wird mit dieser bewegt.

Zwischen den Schienen 2, 4, 8 befinden sich also die Rollenwagen 5, 9, die jeweils Rollen 6, 10 besitzen, die sich zwischen den sich gegenüber stehenden Schienen 2, 4, (Rollen 6) und 4, 8 (Rollen 10) befinden und diese relativ zueinander längsbeweglich lagern.

Die seitlich an den Rollenwagen 5, 9 angeordneten Zahnstangen 7, 11, erstrecken sich in Richtung der Längserstreckung der Schienen 2, 4, 8, also in Auszugsrichtung. Die Zähne der oberen Zahnstange 11 erstrecken sich von der Schubladenschiene 8 nach unten hin in Richtung Korpusschiene 2. Die Zähne der unteren Zahnstange 7 erstrecken sich von der Korpusschiene 2 nach oben hin in Richtung Schubladenschiene 8. Beide Zahnstangen 7, 11 sind dabei mit ihren Zähnen in Eingriff mit einem Synchronritzel 15, welches drehbar auf der Mittelschiene 4 gelagert ist, über einen Zapfen 16, der in eine Bohrung 17 in der Mittelschiene 4 eingreift. Durch diesen Eingriff des Ritzels 15 der Mittelschiene 4 mit den Zahnstangen 7, 11 der Rollenwagen 5, 9 der Korpusschiene 2 und der Schubladenschiene 8, werden die Rollenwagen 5, 9 zur Mittelschiene 4 und zueinander synchronisiert.

In Figur 4 ist ein Rollenwagen 5, 9 für die Schubladenführung 1 nach der Erfindung vergrößert dargestellt. In einem Gehäuse des Rollenwagens 5, 9 sind zahlreiche Rollenkäfige 18 vorhanden, die die Rollen 6, 10 aufnehmen und die in der Längserstreckung des Rollenwagens 5, 9 seriell hintereinander angeordnet sind. Die Rollenkäfige 18 können die gesamte Länge des Rollenwagens 5, 9 abdecken, sind aber bevorzugt wie in Figur 4 zu sehen nur endseitig vorgesehen, da zusätzliche Rollen während des offenen Zustandes der Schublade 12 keinen gewichtsaufnehmenden Effekt zeigen würden und somit nutzlos wären.

Im gezeigten Beispiel sind insgesamt 28 Rollenkäfige 18 vorhanden, in denen gesamt 20 Rollen 6, 10 drehbar lagern. Fünf Rollen 6a, 10a sind vorn oben in den ersten fünf oberen Rollenkäfigen 18 von vorn gelagert, weitere fünf Rollen 6b, 10b sind vorn unten in den ersten fünf unteren Rollenkäfigen 18 von vorn gelagert. Weitere fünf Rollen 6c, 10c sind hinten oben in den ersten fünf oberen Rollenkäfigen 18 von hinten gelagert, weitere fünf Rollen 6d, 10d (in Figur 4 nicht dargestellt) sind hinten unten in den ersten fünf unteren Rollenkäfigen 18 von hinten gelagert. Die leeren Rollenkäfige 18 können je nach geometrischen und Gewichtsverhältnissen ebenfalls mit Rollen bestückt werden, oder aber es könne Rollen 6, 10 aus den fünf bestückten Rollenkäfigen 18 entnommen werden.

Zwischen die oberen Rollen 6a, 6c, 10a, 10c und unteren Rollen 6b, 6d, 10b, 10d greifen die horizontalen Arme der Mittelschiene 4 ein, auf denen die Rollen 6, 10 sich abwälzen.

Seitlich am Gehäuse des Rollenwagens 5, 9 ist die Zahnstange 7, 11 angeordnet, deren Zähne sich in der Hochachse, quer zur Längsachse und quer zur Querachse des Rollenwagens 5, 9 erstrecken. Der in Figur 3 obere Rollenwagen 9 und der dazu identische untere Rollenwagen 5 werden dabei spiegelverkehrt um die Querachse montiert.

Auf der gegenüber liegenden Seite zu den Zahnstangen 7, 11 sind am Rollenwagens 5, 9 zusätzliche Seitenrollen 19 in Rollenkäfigen 20 drehbar gelagert, um eine seitliche rollende Führung des Rollenwagens 5, 9 in der Korpusschiene 2 bzw. der Schubladenschiene 8 zu gewährleisten. In diesem Beispiel sind je eine endseitige untere Seitenrolle 19 pro Rollenwagen 5, 9 vorhanden.

Das Diagramm zur Rollenbelastung der einzelnen Rollen 6, 10 nach Figur 5, welches nachfolgend beschrieben wird, gilt bei geöffneter Schublade 12 mit normaler Belastung mit dem Gewicht 21 für die oberen vorderen Rollen 6a, 10a und für die hinteren unteren Rollen 6d, 10d, da der Drehpunkt der Schublade zwischen den vorderen Rollen 6a, 6b, 10a 10b und den hinteren Rollen 6c, 6d, 10c, 10d liegt. Die unteren vorderen Rollen 6b, 10b werden also durch das Gewicht 21 entlastet, ebenso wie die oberen hinteren Rollen 6c, 10c.

Figur 5 stellt ein Diagramm der unterschiedlichen Belastungen der einzelnen Rollen mit und ohne gleichen Materialien der Rollen an den jeweiligen Positionen 1 bis 5 dar. Die erste, am stärksten belastetste Rolle, die am weitesten vom Drehpunkt der geöffneten Schublade entfernt liegt, liegt in Position 1, gefolgt von der Rolle in Position 2, gefolgt von der Rolle in Position 3, gefolgt von der Rolle in Position 4, gefolgt von der Rolle in Position 5, die am geringsten Belastet ist und am dichtesten an dem Drehpunkt der geöffneten Schublade liegt.

Der linke Balken des Diagramms jeder Rolle stellt den Betrag der Rollenbelastung 22-26 dar, der gemessen werden kann, wenn alle Rollen aus dem gleichen Material bestehen, z.B. Stahl oder Kunststoff. Der sich direkt an diesen Balken anschließende rechte Balken des Diagramms jeder Rolle stellt den Betrag der Rollenbelastung 22-26 dar, der gemessen werden kann, wenn die Rollen mindestens teilweise aus unterschiedlichen Materialien hergestellt sind, z.B. die beiden letzten Rollen 5 und 4 aus Stahl, die mittleren Rollen 3 und 2 aus Kunststoff und die erste führende Rolle aus einem elastisch federnden Gummi/Kautschukmaterial.

Die Kurven 27 und 28 stellen Belastungskurven dar, die aus der Verbindung der Maximalwerte der Belastungen der Rollen 6, 10 erzeugt wurden. Hierbei ist erkennbar, dass bei gleichem Material der Rollen 6, 10 eine steile Belastungskurve 27 besteht, bei unterschiedlichem Material der Rollen 6, 10 eine flachere Belastungskurve 28. Dabei sollte die Elastizität der Rollen von der ersten Rolle aus in Position 22 zur letzen Rolle in Position 26 abnehmen, wobei die erste Rolle in Position 22 relativ gut elastisch federnd ausgebildet sein soll, wie z.B. bei Gummi.

Aus dem Diagramm ist zu entnehmen, dass die ersten beiden Rollen in den Positionen 22 und 23 durch den Einsatz des unterschiedlichen, elastischen Materials im Vergleich zum gleichen Material aller Rollen deutlich,entlastet werden, und diese Last auf die nachfolgenden drei Rollen der Positionen 24-26 aufgeteilt wird, mit Schwerpunkt auf der letzten Rolle in Position 26. Demnach wird durch den Einsatz unterschiedlichen Materials für die Rollen, deren Gewichtsbelastung besser auf alle Rollen aufgeteilt, so dass ein zu vorzeitiger Verschleiß der führenden Rolle(n) durch Verteilen der Last auf die nachfolgenden Rollen vermieden und zeitlich verzögert wird.

### Zeichnungslegende

- 1: Schubladenführung (rechte Seite)
- 2: Korpusschiene
- 3: Anschraubwinkel
- 4: Mittelschiene
- 5: Erster Rollenwagen zwischen Korpusschiene und Mittelschiene
- 6: Rollen, 6a obere vordere Rollen, 6b untere vordere Rollen, 6c obere hintere Rollen, 6d untere hintere Rollen
- 7: Zahnstange zur Synchronisation
- 8: Schubladenschiene
- 9: Zweiter Rollenwagen zwischen Mittelschiene und Schubladenschiene
- 10: Rollen, 10a obere vordere Rollen, 10b untere vordere Rollen, 10c obere hintere Rollen, 10d untere hintere Rollen
- 11: Zahnstange zur Synchronisation
- 12: Schublade
- 13: Dekor der Seitenwand der Schublade
- 14: Schubladenboden
- 15: Synchronritzel der Mittelschiene
- 16: Haltestift für Synchronritzel mit Nietkopf 16a
- 17: Bohrung in Mittelschiene für Haltestift 16
- 18: Rollenkäfige
- 19: Rollen zur Seitenführung
- 20: Rollenkäfig für Seitenrollen
- 21: Gewichtskraft
- 22: Belastung Rolle Position 1
- 23: Belastung Rolle Position 2
- 24: Belastung Rolle Position 3
- 25: Belastung Rolle Position 4
- 26: Belastung Rolle Position 5
- 27: Steile Belastungskurve über die Rollen Positionen 1 bis 5
- 28: Flache Belastungskurve über die Rollen Positionen 1 bis 5

## Patentansprüche

1. Rollschubführung, insbesondere Schubladenführung für Möbel, mit Schienen, die über Wälzkörper relativ zueinander in Längsrichtung verschieblich sind, welche Wälzkörper innerhalb von Wälzkörperwagen drehbar gelagert sind, wobei innerhalb der gemeinsamen Wälzkörperwagen (5, 9) oder Wälzkörperpaketes, die Wälzkörper (6, 10) im Vergleich zueinander mindestens teilweise derart unterschiedlich gestaltet sind, dass sich in einem ausgefahrenen Zustand der Rollschubführung, und damit insbesondere einer Schublade (12), die Gewichtsbelastung (21) gleichmäßiger auf die Wälzkörper (6, 10) verteilt, dadurch dass die unterschiedlich gestalteten Wälzkörper (6, 10) mindestens teilweise aus zueinander unterschiedlichen Materialien mit unterschiedlichen E-Modulen bzw. unterschiedlichen elastischen Eigenschaften hergestellt sind oder dadurch dass die unterschiedlich gestalteten Wälzkörper (6, 10) mindestens teilweise unterschiedliche Geometrien aufweisen, wobei mindestens der am höchsten belastete Wälzkörper (6, 10) elastischer ist, also ein geringeres E-Modul aufweist und/oder einen geringeren Durchmesser und/oder eine größere Breite besitzt und/oder unterschiedlich hohl ausgebildet ist und/oder eine unterschiedlich bombierte Lauffläche aufweist, im Vergleich zu allen anderen Wälzkörpern (6; 10) innerhalb des gemeinsamen Wälzkörperwagens (5; 9) oder Wälzkörperpaketes, **dadurch gekennzeichnet, dass** die Wälzkörperwagen (5; 9) wenigstens vier Wälzkörper (6; 10) beinhalten, die in zwei übereinander angeordneten Reihen von jeweils wenigstens zwei Wälzkörpern (6; 10) vorhanden sind, und dass mindestens der endseitige vorderste obere Wälzkörper (6a, 10a) elastischer ist, also ein geringeres E-Modul aufweist und/oder einen geringeren Durchmesser und/oder eine größere Breite besitzt und/oder unterschiedlich hohl ausgebildet ist und/oder eine unterschiedlich bombierte Lauffläche aufweist, im Vergleich zu allen anderen Wälzkörpern (6; 10) innerhalb des gemeinsamen Wälzkörperwagens (5; 9) oder Wälzkörperpaketes.

2. Rollschubführung nach Anspruch 1, **dadurch gekennzeichnet, dass** im ausgefahrenen Zustand der Rollschubführung auch der endseitige hintere untere Wälzkörper (6d, 10d) elastischer ist, also ein geringeres E-Modul aufweist und/oder einen geringeren Durchmesser und/oder eine größere Breite besitzt und/oder unterschiedlich hohl ausgebildet ist und/oder eine unterschiedlich bombierte Lauffläche aufweist, im Vergleich zu allen anderen Wälzkörpern (6; 10) innerhalb des gemeinsamen Wälzkörperwagens (5; 9) oder Wälzkörperpaketes.

3. Rollschubführung nach Anspruch 1 oder 2, **dadurch gekennzeichnet, dass** die Elastizität mindestens der vorderen oberen Wälzkörper (6a, 10a) und der hinteren unteren Wälzkörper (6d, 10d) mit steigendem Abstand zum Mittelpunkt des Wälzkörperwagens (5; 9) zunimmt, d.h. das E-Modul dieser Wälzkörper (6a, 10a; 6d, 10d) nimmt ab, und/oder dass der Außendurchmesser mindestens der vorderen oberen Wälzkörper (6a, 10a) und der hinteren unteren Wälzkörper (6d, 10d) mit steigendem Abstand zum Mittelpunkt des Wälzkörperwagens (5; 9)abnimmt, und/oder dass die Breite mindestens der vorderen oberen Wälzkörper (6a, 10a) und der hinteren unteren Wälzkörper (6d, 10d) mit steigendem Abstand zum Mittelpunkt des Wälzkörperwagens (5; 9)zunimmt, und/oder dass das Ausmaß der Bombierung mindestens der vorderen oberen Wälzkörper (6a, 10a) und der hinteren unteren Wälzkörper (6d, 10d) mit steigendem Abstand zum Mittelpunkt des Wälzkörperwagens (5; 9)zunimmt, und/oder dass das Ausmaß der Aushöhlung mindestens der vorderen oberen Wälzkörper (6a, 10a) und der hinteren unteren Wälzkörper (6d, 10d) mit steigendem Abstand zum Mittelpunkt des Wälzkörperwagens (5; 9)zunimmt, und/oder dass mindestens die vorderen oberen Wälzkörper (6a, 10a) und die hinteren unteren Wälzkörper (6d, 10d) im Material radial geschichtet aufgebaut sind, wobei mit zunehmendem radialen Abstand zur Drehachse der Wälzkörper das E-Modul des Materials abnimmt.

4. Rollschubführung nach einem der Ansprüche 1 bis 3, **dadurch gekennzeichnet, dass** die Rollschubführung als Schubladenführung für Möbel mit Vollauszug ausgebildet ist, also mit Mittelschiene (4), die über einen ersten Wälzkörperwagen (5) mit Wälzkörpern (6) auf einer Korpusschiene (2) längsbeweglich gelagert ist und auf welcher Mittelschiene (4) über einen zweiten Wälzkörperwagen (9) mit Wälzkörpern (10) eine Schubladenschiene (8) längsbeweglich gelagert ist.

5. Rollschubführung nach einem der Ansprüche 1 bis 4, **dadurch gekennzeichnet, dass** die Wälzkörper als zylindrische oder tonnenförmige Rollen (6, 10) ausgebildet sind.

6. Rollschubführung nach einem der Ansprüche 1 bis 5, **dadurch gekennzeichnet, dass** pro Wälzkörperwagen (5, 9) 4 mal 5 Rollen (6, 10) vorgesehen sind, die jeweils endseitig oben und unten angeordnet sind.

7. Rollschubführung nach einem der Ansprüche 1 bis 6, **dadurch gekennzeichnet, dass** die Schienen (2, 4, 8) vertikal angeordnet sind oder horizontal als Unterflur-Konstruktion unterhalb der Schublade (12) bzw. des Schubladenbodens (14).

## Claims

1. Roller runner system, in particular drawer guidance system for furniture, with rails, which are displaceable relative to one another in the longitudinal direction by means of rolling bodies, which rolling bodies are rotatably mounted within rolling body carriages, the rolling bodies (6, 10) being designed differently from one another, at least partially, within the common rolling body carriages (5, 9) or rolling body package in such a way that in an extended state of the roller runner system, and therefore, in particular of a drawer (12), the weight loading (21) is more uniformly distributed over the rolling bodies (6, 10), in that the differently designed rolling bodies (6, 10) are at least partially produced from materials that are different from one another with different moduli of elasticity or different elastic properties or in that the differently designed rolling bodies (6, 10) have at least partially different geometries, wherein at least the most highly loaded rolling body (6, 10) is more elastic, in other words has a lower modulus of elasticity and/or a smaller diameter and/or a greater width and/or is hollow to a different extent and/or has a differently cambered running surface, in comparison to all the other rolling bodies (6; 10) within the common rolling body carriage (5; 9) or rolling body package, **characterised in that** the rolling body carriages (5; 9) contain at least four rolling bodies (6; 10), which are present in two rows arranged one above the other of at least two roller bodies (6; 10) each, and **in that** at least the foremost upper rolling body (6a, 10a) at the end is more elastic, in other words has a lower modulus of elasticity and/or has a smaller diameter and/or a greater width and/or is hollow to a different extent and/or has a differently cambered running surface, in comparison to all the other rolling bodies (6; 10) within the common rolling body carriage (5; 9) or rolling body package.

2. Roller runner system according to claim 1, **characterised in that** the rear lower rolling body (6d, 10d) at the end is also more elastic in the extended state of the roller runner system, in other words has a lower modulus of elasticity and/or has a smaller diameter and/or a greater width and/or is hollow to a different extent and/or has a differently cambered running surface, in comparison to all the other rolling bodies (6; 10) within the common rolling body carriage (5; 9) or rolling body package.

3. Roller runner system according to claim 1 or 2, **characterised in that** the elasticity of at least the front upper rolling bodies (6a, 10a) and the rear lower rolling bodies (6d, 10d) increases with an increasing spacing from the centre point of the rolling body carriage (5; 9), i.e. the modulus of elasticity of these rolling bodies (6a, 10a; 6d, 10d) decreases, and/or **in that** the external diameter at least of the front upper rolling bodies (6a, 10a) and the rear lower rolling bodies (6d, 10d) decreases with an increasing spacing from the centre point of the rolling body carriage (5; 9) and/or **in that** the width of at least the front upper rolling bodies (6a, 10a) and the rear lower rolling bodies (6d, 10d) increases with an increasing spacing from the centre point of the rolling body carriage (5; 9) and/or **in that** the extent of the camber, at least of the front upper rolling bodies (6a, 10a) and the rear lower rolling bodies (6a, 10d) increases with an increasing spacing from the centre point of the rolling body carriage (5; 9), and/or **in that** the extent of the hollowing of at least the front upper rolling bodies (6a, 10a) and the rear lower rolling bodies (6d, 10d) increases with an increasing spacing from the centre point of the rolling body carriage (5; 9), and/or **in that** at least the front upper rolling bodies (6a, 10a) and the rear lower rolling bodies (6d, 10d) are constructed in a radially layered manner in the material, the modulus of elasticity of the material decreasing with an increasing radial spacing from the rotational axis of the rolling bodies.

4. Roller runner system according to any one of claims 1 to 3, **characterised in that** the roller runner system is configured as a drawer guidance system for furniture with full extension, in other words with a centre rail (4), which is longitudinally moveably mounted by a first rolling body carriage (5) with rolling bodies (6) on a cabinet rail (2) and on which centre rail (4), a drawer rail (8) is longitudinally moveably mounted by means of a second rolling body carriage (9) with rolling bodies (10).

5. Roller runner system according to any one of claims 1 to 4, **characterised in that** the rolling bodies are configured as cylindrical or barrel-shaped rollers (6, 10).

6. Roller runner system according to any one of claims 1 to 5, **characterised in that** 4 times 5 rollers (6, 10), which are in each case arranged at the top and bottom at the end, are provided for each rolling body carriage (5, 9).

7. Roller runner system according to any one of claims 1 to 6, **characterised in that** the rails (2, 4, 8) are arranged vertically or horizontally as an underfloor construction below the drawer (12) or the drawer base (14).

## Revendications

1. Glissière à rouleaux, en particulier glissière de tiroir pour meubles, avec des coulisses qui sont aptes à coulisser les unes par rapport aux autres dans le sens longitudinal par l'intermédiaire de corps de roulement, lesquels corps de roulement sont montés en rotation à l'intérieur de chariots de corps de roulement, étant précisé qu'à l'intérieur des chariots de corps de roulement (5, 9) ou paquets de corps de roulement communs, les corps de roulement (6, 10) ont des formes au moins en partie différentes, les uns par rapport autres, de telle sorte que dans un état déployé de la glissière à rouleaux, et donc en particulier d'un tiroir (12), la contrainte de poids (21) se répartisse plus uniformément sur les corps de roulement (6, 10), grâce au fait que les corps de roulement (6, 10) de formes différentes sont fabriqués au moins en partie dans des matériaux différents, avec des modules d'élasticité différents ou des propriétés élastiques différentes, ou grâce au fait que les corps de roulement (6, 10) de formes différentes présentent au moins en partie des géométries différentes, étant précisé que le corps de roulement (6, 10) le plus contraint, au moins, est plus élastique et présente donc un module d'élasticité plus faible et/ou un diamètre plus petit et/ou une largeur plus grande et/ou est plus ou moins creux et/ou présente une surface de roulement plus ou moins bombée par rapport à tous les autres corps de roulement (6 ; 10) à l'intérieur du chariot de corps de roulement (5, 9) ou paquet de corps de roulement commun, **caractérisée en ce que** les chariots de corps de roulement (5 ; 9) contiennent au moins quatre corps de roulement (6 ; 10) qui sont prévus sur deux rangées superposées d'au moins deux corps de roulement (6 ; 10) chacune, et **en ce que** le corps de roulement supérieur avant côté extrémité (6a, 10a), au moins, est plus élastique, et présente donc un module d'élasticité plus faible et/ou un diamètre plus petit et/ou une largeur plus grande et/ou est plus ou moins creux et/ou présente une surface de roulement plus ou moins bombée par rapport à tous les autres corps de roulement (6 ; 10) à l'intérieur du chariot de corps de roulement (5 ; 9) ou paquet de corps de roulement commun.

2. Glissière à rouleaux selon la revendication 1, **caractérisée en ce que** dans l'état déployé de ladite glissière, le corps de roulement inférieur arrière côté extrémité (6d, 10d) lui aussi est plus élastique, et présente donc un module d'élasticité plus faible et/ou un diamètre plus petit et/ou une largeur plus grande et/ou est plus ou moins creux et/ou présente une surface de roulement plus ou moins bombée par rapport à tous les autres corps de roulement (6 ; 10) à l'intérieur du chariot de corps de roulement (5 ; 9) ou paquet de corps de roulement commun.

3. Glissière à rouleaux selon la revendication 1 ou 2, **caractérisée en ce que** l'élasticité des corps de roulement supérieurs avant (6a, 10a) et des corps de roulement inférieurs arrière (6d, 10d), au moins, augmente en s'éloignant du milieu du chariot de corps de roulement (5 ; 9), c'est-à-dire que le module d'élasticité de ces corps de roulement (6a, 10a ; 6d, 10d) diminue, et/ou **en ce que** le diamètre extérieur des corps de roulement supérieurs avant (6a, 10a) et des corps de roulement inférieurs arrière (6d, 10d), au moins, diminue en s'éloignant du milieu du chariot de corps de roulement (5 ; 9), et/ou **en ce que** la largeur des corps de roulement supérieurs avant (6a, 10a) et des corps de roulement inférieurs arrière (6d, 10d), au moins, augmente en s'éloignant du milieu du chariot de corps de roulement (5 ; 9), et/ou **en ce que** le degré de bombement des corps de roulement supérieurs avant (6a, 10a) et des corps de roulement inférieurs arrière (6d, 10d), au moins, augmente en s'éloignant du milieu du chariot de corps de roulement (5 ; 9), et/ou **en ce que** le degré de creusement des corps de roulement supérieurs avant (6a, 10a) et des corps de roulement inférieurs arrière (6d, 10d), au moins, augmente en s'éloignant du milieu du chariot de corps de roulement (5 ; 9), et/ou **en ce que** le matériau des corps de roulement supérieurs avant (6a, 10a) et des corps de roulement inférieurs arrière (6d, 10d), au moins, a une structure stratifiée radialement, étant précisé que le module d'élasticité du matériau diminue en s'éloignant radialement de l'axe de rotation des corps de roulement.

4. Glissière à rouleaux selon l'une des revendications 1 à 3, **caractérisée en ce que** la glissière à rouleaux est conçue comme une glissière de tiroir pour meubles à sortie totale, et donc avec une coulisse centrale (4) qui est montée mobile longitudinalement sur une coulisse de corps (2) par l'intermédiaire d'un premier chariot de corps de roulement (5) pourvu de corps de roulement (6), et sur laquelle une coulisse de tiroir (8) est montée mobile longitudinalement par l'intermédiaire d'un second chariot de corps de roulement (9) pourvu de corps de roulement (10).

5. Glissière à rouleaux selon l'une des revendications 1 à 4, **caractérisée en ce que** les corps de roulement sont conçus comme des rouleaux (6, 10) cylindriques ou en forme de barillets.

6. Glissière à rouleaux selon l'une des revendications 1 à 5, **caractérisée en ce qu'**il est prévu pour chaque chariot de corps de roulement (5, 9) 4 fois 5 rouleaux (6, 10), qui sont disposés respectivement en haut et en bas, aux extrémités.

7. Glissière à rouleaux selon l'une des revendications 1 à 6, **caractérisée en ce que** les coulisses (2, 4, 8) sont disposées verticalement ou horizontalement sous la forme d'une construction surbaissée, au-dessous du tiroir (12) ou du fond de tiroir (14).
